# EUROPÄISCHE PATENTANMELDUNG

(11) **EP 1 536 360 A1**
(43) Veröffentlichungstag der Anmeldung: **01.06.2005**
(21) Anmeldenummer: 04024409.7
(22) Anmeldetag: 13.10.2004
(51) Int. Cl.: G06F 17/60

(54) **Verfahren zur Bearbeitung mindestens einer Anforderung eines medizinischen Gutes**

(30) Priorität: 30.10.2003 DE 10350961
(71) Anmelder: Deutsche Post AG, 53113 Bonn (DE)
(72) Erfinder: Schildknecht, Susanne, 53179 Bonn (DE); Konstantini, Ferid, 53115 Bonn (DE)
(74) Vertreter: Jostarndt, Hans-Dieter, Dr. Dipl.-Phys.

(57) **Zusammenfassung**

Die Erfindung betrifft ein Verfahren sowie ein System zur Bearbeitung mindestens einer Anforderung eines medizinischen Gutes, wobei das medizinische Gut ein Arzneimittel und/oder ein medizinisches Produkt ist. Erfindungsgemäß wird die Anzahl der an der Anforderung von medizinischen Gütern beteiligten Vorrichtungen und technischen Abläufe minimiert und beschleunigt. Ferner werden gesetzlich und medizinisch erforderliche Systemabläufe bereitstellt.

Die Erfindung zeichnet sich dadurch aus, dass die Anforderung erfasst und als ein elektronisches Abbild auf einer graphischen Benutzeroberfläche dargestellt wird, und dass die Anforderung und/oder das elektronische Abbild zur Bestimmung des medizinischen Gutes ausgewertet werden, wobei ferner die Auswertung zu mindestens einem Ergebnis führt, so dass im Falle eines Ergebnisses A das elektronische Abbild der Anforderung gespeichert wird und eine Bestellung des medizinischen Gutes unterbleibt, und dass ferner im Falle eines Ergebnisses B das elektronische Abbild der Anforderung gespeichert und mindestens ein medizinisches Gut bestellt wird, so dass nach Erhalt des medizinischen Gutes im Falle eines Ergebnisses C einer zweiten Auswertung zur Überprüfung des erhaltenen medizinischen Gutes der Transport des medizinischen Gutes zum Zielort erfolgt, wobei ferner eine Sendungsverfolgung des medizinischen Gutes erfolgt, und im Falle eines Ergebnisses D der zweiten Auswertung der Transport des medizinischen Gutes zum Zielort unterbleibt.

## Beschreibung

### Technisches Gebiet

Die Erfindung betrifft ein Verfahren zur Bearbeitung mindestens einer Anforderung eines medizinischen Gutes, wobei das medizinische Gut ein Arzneimittel und/oder ein medizinisches Produkt ist, mit Mitteln zur Erfassung der Anforderung und Mitteln zur Auswertung von Abbildern der Anforderung, sowie mit Mitteln zur Bestellung und Überprüfung des erhaltenen medizinischen Gutes sowie mit Mitteln zum Transport des medizinischen Gutes, wobei die Anforderung mindestens Daten eines Anfordernden und Daten über einen Zielort des Transportes aufweist.

Die Erfindung betrifft ferner ein System zur Bearbeitung mindestens einer Anforderung eines medizinischen Gutes mit Mitteln zur Erfassung und Auswertung der Anforderung, sowie mit Mitteln zur Bestellung und Überprüfung des erhaltenen medizinischen Gutes sowie mit Mitteln zum Transport des medizinischen Gutes.

### Stand der Technik

Die Offenlegungsschrift US 2003/0018495 A1 beschreibt eine netzwerkbasierte Vorrichtung zum Austausch von medizinischen Daten. Einzelne Komponenten des Netzwerks stellen Eingabegeräte für medizinisches Personal auf der einen Seite und pharmazeutisch geschultes Personal auf der anderen Seite dar. Insbesondere werden Verfahrensschritte zur Verschlüsselung, Erfassung und Digitalisierung von elektronischen Rezepten beschrieben. Die vom Arzt digital signierten elektronischen Rezepte können wahlweise direkt durch den Arzt oder durch den Patienten in Form einer E-Mail oder in Form eines Direktzugriffs an eine Erfassungsstelle übermittelt werden. Es besteht ferner die Möglichkeit, patientenrelevante Informationen als weiteren Bestandteil des elektronischen Rezepts zu verarbeiten und zu übermitteln. Die ermittelten Daten werden nach erfolgreicher Bearbeitung des Vorgangs verschlüsselt in einem Datenarchiv abgelegt.
Das vorgenannte Verfahren sieht voneinander verschiedene Wahlmöglichkeiten vor, die angeforderten Arzneimittel dem Patienten zugänglich zu machen.

Die Offenlegungsschrift WO 02/29664 A1 beschreibt ein Verfahren zur datenbankbasierten Verknüpfung der Tätigkeiten von Arzt, Apotheker, pharmazeutischer Industrie und Patient. Hierbei werden u. a. vom Arzt angefertigte elektronische Dokumente/Rezepte über ein geeignetes Eingabegerät direkt an einen zentralen Datenserver gesendet. Auf den Datenserver können ferner Patienten und Apotheker zugreifen. Neben den elektronischen Rezepten werden Patientendaten einer Verschreibungsvorgeschichte sowie Krankenverläufe auf dem Datenserver abgebildet.
Die Datenverarbeitungsverfahren auf dem Datenserver erlauben, in Verbindung mit einer weiteren medizinischen Datenbank mögliche Kontraindikationen mit einem verschriebenen Arzneimittel festzustellen und das Ergebnis dem Arzt oder Apotheker zu übermitteln.
Das Serversystem ermöglicht es dem Patienten, über die angeschlossenen Eingabe- und Anzeigegeräte einen ihm genehmen Apotheker an einem Ort seiner Wahl auszuwählen, der über das angeforderte Rezept verfügt. Dort kann der Patient das gewünschte Arzneimittel abholen.

Die vorgenannten Vorrichtungen und Verfahren verbindet das Ziel, medizinische Daten über eine Datenbankstruktur unterschiedlichen Zugriffsstellen zur Weiterverarbeitung verfügbar zu machen. Beispielsweise ermöglichen die vorgenannten Datenbankstrukturen den Angestellten von Krankenversicherungen sowie Managern im Gesundheitswesen, verschiedene Prozesse anhand von Eintragungen neuer Daten in die Datenbank zu verfolgen. Insbesondere sind die Behandlungsund Verschreibungsdaten eines Patienten an sämtlichen Zugriffsstellen durch autorisierte Personen abrufbar.

Nachteilig bei den vorgenannten Vorrichtungen ist, dass die Zusammenarbeit einer erheblichen Anzahl von funktional und geographisch verschiedenen Vorrichtungen zur Bearbeitung eines medizinischen Vorgangs vonnöten ist. Hierdurch kann nicht ausgeschlossen werden, dass die Aufiretenswahrscheinlichkeit von Fehlern oder Verzögerungen innerhalb von medizinischen Abläufen ungewünscht hoch ist.

### Darstellung der Erfindung

Der Erfindung liegt die Aufgabe zugrunde, ein Verfahren zu schaffen, das die Anzahl der an der Anforderung von medizinischen Gütern beteiligten Vorrichtungen minimiert und die technischen Abläufe beschleunigt.

Der Erfindung liegt ferner die Aufgabe zugrunde, ein System zu schaffen, welches von der Bearbeitung der medizinischen Anforderung bis zum Transport des angeforderten medizinischen Gutes zum Anfordernden alle gesetzlich und medizinisch erforderlichen Systemabläufe bereitstellt.

Erfindungsgemäß wird diese Aufgabe in Verbindung mit dem Oberbegriff des Patentanspruchs 1 dadurch gelöst, dass die Anforderung erfasst und als ein elektronisches Abbild auf einer graphischen Benutzeroberfläche dargestellt wird, und dass die Anforderung und/oder das elektronische Abbild zur Bestimmung des medizinischen Gutes ausgewertet werden, wobei ferner die Auswertung zu mindestens einem Ergebnis führt, so dass im Falle eines Ergebnisses A das elektronische Abbild der Anforderung gespeichert wird und eine Bestellung des medizinischen Gutes unterbleibt, und dass ferner im Falle eines Ergebnisses B das elektronische Abbild der Anforderung gespeichert und mindestens ein medizinisches Gut bestellt wird, so dass nach Erhalt des medizinischen Gutes im Falle eines Ergebnisses C einer zweiten Auswertung zur Überprüfung des erhaltenen medizinischen Gutes der Transport des medizinischen Gutes zum Zielort erfolgt, wobei ferner eine Sendungsverfolgung des medizinischen Gutes erfolgt, und im Falle eines Ergebnisses D der zweiten Auswertung der Transport des medizinischen Gutes zum Zielort unterbleibt.

Bei einer Vielzahl von zu behandelnden Personen handelt es sich um chronisch Kranke, die regelmäßig und in der Regel im Voraus planbare Arzneimittel benötigen. Entsprechend den konventionellen Verfahren ist diese Personengruppe regelmäßig dazu aufgefordert, die benötigten Arzneimittel von einer stationären Apotheke zu beziehen.
Die erforderlichen Umstände zum Bezug der Arzneimittel können beispielsweise für in der Bewegungsfreiheit eingeschränkte chronisch Kranke mitunter erheblich sein und zu unerwünschten Komplikationen führen. Insbesondere muss unter jeden Umständen gewährleistet sein, dass die bezogenen Arzneimittel bis zur Anwendung in einem vom Hersteller vorgesehenen Zustand verbleiben und nicht beispielsweise durch einen unsachgemäßen Transport beeinflusst werden, da ansonsten ein Ausbleiben der medizinischen Wirkung nicht ausgeschlossen werden kann. Hiervon wären insbesondere, aber nicht ausschließlich, chronisch Kranke erheblich betroffen.
Außerdem werden Ansprüche an den Daten- und Vertraulichkeitsschutz berücksichtigt.

Erfindungsgemäß werden die vorgenannten Vorteile dadurch erzielt, dass die Anforderung anhand des Mittels zur Erfassung der Anforderung erfasst und elektronisch abgebildet wird, wobei ferner eine Darstellung des elektronischen Abbildes auf einer graphischen Benutzeroberfläche erfolgt. Zudem werden die Anforderung und/oder das elektronische Abbild zur Bestimmung des medizinischen Gutes ausgewertet.
Unter graphischer Benutzeroberfläche ist hierbei jegliches Mittel zur Verwertung und Repräsentation von elektronischen Informationen zu verstehen. Als besonders vorteilhaft haben sich Mittel wie Monitore, Laserbeamer, graphische Displays sowie Geräte basierend auf Elektronenstrahlenanregung erwiesen.

Handelt es sich bei dem angeforderten Gut um mindestens einen Wirkstoff ist das angeforderte Arzneimittel anhand seines bzw. seiner Wirkstoffe beschrieben. Erfindungsgemäß erfolgt eine Auswahl des Arzneimittels auf Grund der angeforderten Wirkstoffe. Die Anforderung eines Wirkstoffs weist keine Angaben über einen vorgeschriebenen Hersteller auf. Sollte mehr als ein Arzneimittel, welches die angeforderten Wirkstoffe enthält, vorliegen, wird vorzugsweise das preislich günstigere Arzneimittel ausgewählt. Es hat sich als besonders vorteilhaft erwiesen, bei Vorhandensein mehrerer Arzneimittel nach Möglichkeit ein Generikum auszuwählen.
Im Falle einer vorgeschriebenen Arzneimittelanforderung erfolgt die Auswahl des Arzneimittels ausschließlich anhand des vorgeschriebenen Arzneimittels sowie anhand des vorgeschriebenen Herstellers. Liegt ferner ein aut idem Merkmal der Anforderung vor, kann das angeforderte Arzneimittel durch ein anderes Arzneimittel ersetzt werden. Vorzugsweise liegt die Zustimmung des Anfordernden zum Ersatz des Arzneimittels vor. Der Ersatz des angeforderten Arzneimittels wird vorzugsweise dann vorgenommen, wenn zum Zeitpunkt der Anforderung kein positiver Bestand in einem Güterlager vorrätig ist und/oder wenn ein Generikum preislich günstiger ist.

Ferner ergeben sich aus der Auswertung der Anforderung Daten des Anfordernden. Die Bestimmung kann hierbei automatisch und/oder manuell erfolgen. Die Auswertung der Anforderung führt zu mindestens einem Ergebnis. Die Auswertung beinhaltet eine Überprüfung einer elektronischen Lesbarkeit sowie eine Plausibilitätsprüfung, wobei mittels der Plausibilitätsprüfung eine Zuordnung eines Inhalts der Anforderung zu einem medizinischen Gut geprüft wird. Sollte sich keine elektronische Lesbarkeit und/oder eine negative Plausibilitätsprüfung aufgrund einer fehlenden Zuordnung ergeben, wird das Ergebnis A ausgegeben. Im Falle des Ergebnisses A wird das elektronische Abbild der Anforderung gespeichert und die Bestellung des medizinischen Gutes unterbleibt. Der Anfordernde wird über das Unterbleiben und die Gründe des Unterbleibens der Bestellung in Kenntnis gesetzt.

Ergibt sich eine elektronische Lesbarkeit und eine positive Plausibilitätsprüfung, wird das Ergebnis B ausgegeben.
Im Falle des Ergebnisses B der Auswertung wird das elektronische Abbild der Anforderung gespeichert und mindestens ein medizinisches Gut bestellt, wobei nach Erhalt des medizinischen Gutes mittels einer zweiten Auswertung eine Überprüfung des erhaltenen medizinischen Gutes mit dem auf der Bestellung ausgezeichneten medizinischen Gut vorgenommen wird.

Das Ergebnis C der zweiten Auswertung wird erzeugt, falls Bestellung und Erhalt des medizinischen Gutes übereinstimmen, so dass der Transport des erhaltenen medizinischen Gutes zum Zielort erfolgt. Hieran anschließend erfolgt die Sendungsverfolgung des medizinischen Gutes während des Transportes zum Zielort. Im Falle des Ergebnisses D der zweiten Auswertung - Bestellung und Erhalt des medizinischen Gutes stimmen nicht überein - unterbleibt der Transport des medizinischen Gutes zum Zielort. Der Anfordernde wird über das Unterbleiben und die Gründe des Unterbleibens des Transportes in Kenntnis gesetzt.

Die Erfindung stellt ein Verfahren zur Verfügung, welches durch Minimierung der am Ablauf beteiligten Prozesse die Prozesszeiten verkürzt, die Anforderung zuverlässig bearbeitet und infolge von Auswertungen der Anforderung einen autorisierten Transport von medizinischen Gütern zu dem vom Anfordernden angegebenen Zielort ermöglicht.

Das erfindungsgemäße Verfahren erzielt die gewünschte Minimierung durch eine Verbindung von technischen sowie informationstechnischen Mitteln eines Dienstleisters. Insbesondere werden Mittel zur Bearbeitung der Anforderung bis zur Verwaltung logistischer Vorgänge mit geeigneten Mitteln zum Transport der medizinischen Güter zum Zielort verbunden.
Vorteilhafte Weiterbildungen des Verfahrens sind Gegenstand der Ansprüche 2 bis 64.

In einer bevorzugten Ausführungsform der Erfindung erfolgt die Sendungsverfolgung des medizinischen Gutes mit Hilfe eines Identifikationscodes.
Hierzu wird das medizinische Gut und/oder die Verpackung des medizinischen Gutes mit dem Identifikationscode versehen, wobei der Identifikationscode einoder zweidimensional sein kann.

In einer besonders bevorzugten Ausführungsform stehen die Mittel zur Erfassung und Auswertung der Anforderung, die Mittel zur Bestellung und Überprüfung des medizinischen Gutes sowie die Mittel zum Transport des medizinischen Gutes mit einem Softwareagenten eines Versandapothekers und/oder mit einem Softwareagenten des Dienstleisters in Verbindung.

Softwareagenten, die auch als intelligente Agenten bezeichnet werden, werden vorzugsweise durch Softwareeinheiten gebildet, welche ihre Umwelt überwachen und auf Anforderung automatisch handeln. Im dargestellten Fall handeln ein Softwareagent für den Versandapotheker und ein anderer Softwareagent für den Dienstleister.

Zweckmäßigerweise wird die Verbindung zwischen den Softwareagenten unter Berücksichtigung bereits bestehender Systeme seitens einer Versandapotheke eingerichtet.

Der Begriff "Versandapotheke" umfasst alle Apotheken, die einen Versand von Arzneimitteln vornehmen.

In einer weiteren bevorzugten Ausführungsform kann der Anfordernde eine Anforderung mit oder ohne Rezept wahlweise dem Softwareagenten des Versandapothekers oder dem Softwareagenten des Dienstleisters übermitteln.
Die Anforderung kann postalisch, per Telefon, unter Benutzung eines Fax-Gerätes oder mittels eines Internet-Zuganges durch ein vom Dienstleister zur Verfügung gestelltes Portal erfolgen. Ist der Dienstleister zur Entgegennahme und Bearbeitung von Anforderungen befugt, kann die Anforderung dem Dienstleister übermittelt werden.
In einer besonders bevorzugten Ausführungsform der Erfindung erfolgt eine Unterteilung der Anforderungen in verschreibungspflichtige und nicht verschreibungspflichtige Anforderungen. Anfordernde sind sowohl gesetzlich (GKV) als auch privat (PKV) versicherte Personen.

Zweckmäßigerweise werden die Anforderungen von verschreibungspflichtigen Arzneimitteln auf Dringlichkeit geprüft. Hierbei wird festgestellt, ob eine zeitliche Bevorzugung der Bearbeitung der Anforderung sowie des Transportes des Arzneimittels erforderlich ist. Liegt Dringlichkeit vor, werden nötige Schritte zur Umsetzung der Bevorzugung eingeleitet.

Im Falle der postalischen Anforderung befindet sich das Rezept aus Datenschutzgründen innerhalb eines Umschlages. Im Zuge einer Inhaltsprüfung werden die Umschläge geöffnet und die darin befindlichen schriftlichen Rezepte nach Anfordernden sortiert.

Nach erfolgter Vorprüfung erzeugt ein Mittel zur Digitalisierung und Erkennung elektronische Abbilder der grafischen Oberfläche des Rezeptes, wobei eine Krankenkassenkennung, die Daten des Anfordernden sowie die Daten über den Zielort des Transportes ermittelt werden. Abschließend werden die elektronischen Abbilder mit einer digitalen Signatur versehen.

Ein bekanntes Verfahren zur Erzeugung digitaler Signaturen wird von der Deutschen Post AG unter der Bezeichnung "Signtrust" angeboten. Vorzugsweise wird ein Verfahren, das in der Deutschen Patentanmeldungschrift DE 101 34 682 A1 beschrieben wird, zur Erzeugung digitaler Signaturen verwendet.

Eine andere, gleichfalls vorteilhafte Ausführungsform der Erfindung sieht eine Erstellung fälschungssicherer Datensätze anhand eines Geheimnisses vor, das nur von einer Prüfungsstelle entschlüsselt werden kann. Ein derartiges Verfahren ist in der deutschen Patentschrift DE 100 20 563 C2 dargestellt. Diese Druckschrift betrifft ein Verfahren zur Erstellung fälschungssicherer Dokumente unter Einsatz eines Sicherungsmoduls, wobei das Sicherungsmodul ein temporäres Geheimnis erzeugt, das einem Dokumenthersteller nicht zur Kenntnis gelangt, wobei das temporäre Geheimnis zusammen mit Informationen, die Auskunft über die Identität des Sicherungsmoduls geben, verschlüsselt an eine Bescheinigungsstelle übergeben wird, wobei eine Bescheinigungsstelle das temporäre Geheimnis entschlüsselt, die Identität des Sicherungsmoduls erkennt und das temporäre Geheimnis zusammen mit weiteren Informationen derart verschlüsselt, dass nur eine Prüfstelle eine Entschlüsselung vornehmen kann und an den Dokumenthersteller übermittelt, wobei der Dokumenthersteller eigene Daten, die in das Dokument eingebracht werden, dem Sicherungsmodul übergibt, wobei das Sicherungsmodul die selbst vom Dokumenthersteller eingebrachten Daten in einer Weise mit dem temporären Geheimnis irreversibel verknüpft, dass ausschließlich bei wiederholter Verknüpfung derselben Daten in derselben Weise ein identisches Ergebnis entstehen kann, wobei keine Rückschlüsse auf das temporäre Geheimnis möglich sind. Dieses Verfahren erhöht die Datensicherheit dadurch, dass das Ergebnis der irreversiblen Verknüpfung der von dem Dokumenthersteller eingebrachten Daten und dem temporären Geheimnis in das Dokument übernommen wird.

In der Patentschrift DE 100 20 561 C2 wird ein besonders geeignetes Sicherungsmodul zur Durchführung des in der Patentschrift DE 100 20 563 C2 dargestellten Verfahrens offenbart.

In einer weiteren bevorzugten Ausführungsform erfolgt die Anforderung verschreibungspflichtiger Arzneimittel als so genanntes elektronisches Rezept (eRezept). Vorzugsweise ist das eRezept ein Informationsbestandteil einer Krankenkassenkarte, wobei das Verfahren auch von anderen Datenträgern Gebrauch macht. Beispielsweise ist das eRezept auf einer Diskette, einer CD-ROM, einem DAT oder einem Memorystick gespeichert.
In einer weiteren Ausführungsform der Erfindung wird das eRezept vom Computer eines verschreibenden Arztes oder vom Computer des Patienten elektronisch bei der Versandapotheke und/oder beim Dienstleister eingelöst.
Der Begriff "Computer" ist dabei in keiner Weise einschränkend zu verstehen. Es kann sich hierbei um eine beliebige, zur Durchführung von Berechnungen geeignete Einheit handeln, beispielsweise eine Workstation, einen Personalcomputer, einen Mikrocomputer oder eine zur Durchführung von Berechnungen und /oder Vergleichen geeignete Schaltung.

In einem weiteren Schritt wird die elektronische Lesbarkeit der elektronischen Abbilder überprüft. Elektronische Abbilder sind lesbar, wenn gesetzlich und medizinisch relevante Informationen der Anforderung vollständig erfasst werden können. Sollte die elektronische Lesbarkeit der elektronischen Abbilder nur teilweise oder gar nicht möglich sein, erfolgt eine Überprüfung der Lesbarkeit durch den Softwareagenten des Versandapothekers und/oder durch den Softwareagenten des Dienstleisters. Die elektronische Lesbarkeit wird mit Hilfe von Referenzdaten optimiert. Die Referenzdaten beinhalten hierbei Informationen über eine medikamentöse Vorgeschichte des Anfordernden, Adressdaten des Anfordernden sowie Stammdaten von Arzneimitteln. Ergibt sich durch die Überprüfung keine elektronische Lesbarkeit, wird das Ergebnis A ausgegeben.

In einer weiteren Ausführungsform werden die lesbaren Abbilder und/oder das elektronische Rezept durch die Plausibilitätsprüfung ausgewertet, so dass insbesondere medizinisch ungewollte Anforderungen unterbleiben. Ferner wird neben einer Prüfung auf inhaltliche Geschlossenheit der erfassten Bestellung auch eine Überprüfung auf etwaige Kontraindikationen des angeforderten Arzneimittels in Wechselwirkung mit bereits verschriebenen Arzneimitteln vorgenommen. Ein weiterer Bestandteil der Plausibilitätsprüfung ist eine Überprüfung, ob der verschreibende Arzt über eine ärztliche Zulassung verfügt. Hierzu werden insbesondere Informationen einer Arztzulassungsdatenbank verwendet.

Hierbei hat es sich als vorteilhaft erwiesen festzustellen, ob die lesbaren elektronischen Abbilder einem verschreibungspflichtigen Rezept entsprechen. Die Plausibilitätsprüfung zieht ferner Stammdaten von bereits registrierten und erhältlichen Arzneimitteln heran. Erfolgt durch die Plausibilitätsprüfung eine eindeutige Zuordnung der lesbaren elektronischen Abbilder und/oder des elektronische Rezeptes zu einem Arzneimittel, werden die lesbaren Abbilder und/oder das elektronische Rezept archiviert.
Bleibt die eindeutige Zuordnung zu einem Arzneimittel aus, werden die lesbaren elektronischen Abbilder durch den Softwareagenten des Versandapothekers und/oder durch den Softwareagenten des Dienstleisters bewertet. Falls keine eindeutige Zuordnung zu einem Arzneimittel durch die Bewertung erfolgt, wird ein Softwareagent des verschreibenden Arztes oder eine sonstige zur Autorisierung berechtigte Instanz kontaktiert. Jede Bewertung des elektronischen Abbildes wird elektronisch signiert, so dass Änderungen am elektronischen Abbild eindeutig nachvollziehbar sind.

Ferner erfolgt eine weitere Überprüfung des Alters der Anforderung. Im Falle von Anforderungen, die vom Ausstellungsdatum gerechnet älter als 30 Tage sind, kontaktiert der Softwareagent des Dienstleisters den Softwareagenten des verschreibenden Arztes zur Festlegung des weiteren Vorgehens. Der Softwareagent des verschreibenden Arztes legt fest, ob die Anforderung weiterverarbeitet wird, oder ob der Anfordernde über ein Ausbleiben der Weiterverarbeitung informiert wird.

Ergibt sich durch die Plausibilitätsprüfung keine eindeutige Zuordnung zu einem Arzneimittel, ist die Plausibilitätsprüfung negativ und es wird das Ergebnis A ausgegeben. Eine positive Plausibilitätsprüfung erfolgt im Falle einer eindeutigen Zuordnung zu einem Arzneimittel.

Es hat sich ferner als zweckdienlich erwiesen, zur Erfassung der Anforderung und zur Überprüfung des erhaltenen medizinischen Gutes die lesbaren elektronischen Abbilder der grafischen Oberfläche der Anforderung sowie erfasste elektronische Abbilder des erhaltenen medizinischen Gutes durch den Softwareagenten des Versandapothekers und/oder durch den Softwareagenten des Dienstleisters auszuwerten.

Vorzugsgemäß wird zum Transfer der Anforderungen eine geeignete Schnittstelle zwischen dem Dienstleister und der Versandapotheke konfiguriert.

Die Vorgehensweise bei der Erfassung von Arzneimittelanforderungen auf Basis des eRezeptes unterscheidet sich nur dahingehend von der Datenerfassung nichtelektronischer Anforderungen, dass - falls erforderlich - eine Datenkorrektur durch eine Konvertierung der elektronischen Daten des elektronischen Rezeptes erfolgt. Bei der Konvertierung werden nicht eindeutig lesbarer Informationen durch den Softwareagenten des Versandapothekers und/oder durch den Softwareagenten des Dienstleisters ersetzt. Die Ersetzung kann mittels einer medizinischen Datenbank erleichtert werden.

Vorzugsweise erfolgt die Anforderung nicht verschreibungspflichtiger medizinischer Güter postalisch, per FAX, per E-Mail oder telefonisch.

Die Vorgänge der postalischen Anforderung sowie der Anforderung per Fax und der damit in Verbindung stehenden Erfassung der Informationen der Anforderung werden entsprechend den korrespondierenden Vorgängen im Falle von verschreibungspflichtigen Arzneimitteln ausgeführt.
Eine telefonische Anforderung wird als elektronisches Abbild archiviert.

Die technischen Abläufe im Falle von Anforderungen per E-Mail oder durch ein Internet-Portal entsprechen den Vorgängen der Anforderungen via eRezept. Hierbei ist es zweckmäßig, aber nicht zwingend erforderlich, dass bei rezeptpflichtigen Arzneimitteln das Originalrezept vorliegt. Beim eRezept handelt es sich bereits um ein Originalrezept.

Es hat sich als besonders zweckmäßig erwiesen, eine Bonität des Anfordernden zu prüfen. Die Bonität ist ein Maßstab für die Kreditwürdigkeit des Anfordernden.

In einer weiteren Ausführungsform der Erfindung werden Informationen der Anforderung in einer Kundendatei abgelegt, wobei die nach erstmaliger Registrierung der Informationen des Anfordernden zu jedem Zeitpunkt verfügbare Kundendatei pro Anfordernden vorzugsweise mehrere der folgenden Eintragungen beinhaltet:
- Kundennummer
- Bestellnummer
- Adressdaten
- Einverständniserklärung vom Anfordernden zur Registrierung von Daten über den Anfordernden und medizinischen Daten
- Daten über den Zielort des Transports
- Angaben über eine bevollmächtigte Person zur Entgegennahme der Ware
- persönliche Daten (z. B. Geburtsdatum und Geschlecht),
- Angaben zur Bonität
- Angaben zum Zahlungsverkehr (z. B. Kontoverbindung, Kreditkartennummer)
- Erteilung einer Einzugsermächtigung (geregeltes Lastschriftverfahren),
- Angaben zur Art der Versicherung sowie damit in Verbindung stehende Kontaktadressen
- Kostenträger, mit Kennung, Anschrift und Kontaktdaten
- Angaben über den Hausarzt und weitere behandelnde Ärzte mit Zulassungsinformationen, Namen, Anschrift, Kontaktdaten
- medikamentöse Vorgeschichte
- Patientennummer
- Versicherungsnummer
- Kontakthistorie
- Historie der Medikation

Ein Kostenträger ist eine Krankenkasse oder der Anfordernde.

Der Anfordernde kann eine erteilte Einzugsermächtigung jederzeit widerrufen. Die Kontoverbindung sowie die Gültigkeit des Kontos werden elektronisch geprüft, beispielsweise mittels internetbasierter Onlinedienste.

In einer weiteren Ausführungsform wird geprüft, ob die Kundendatei inhaltlich verifizierbar ist, und ob sich der Zielort in einem Gebiet befindet, in das ein Transport des medizinischen Gutes nur nach vorheriger Genehmigung durch den Softwareagenten des Versandapothekers vorgenommen wird.

Zweckmäßigerweise wird eine schriftliche und/oder elektronische Einverständniserklärung zur Registrierung der Informationen und von medizinischen Daten hinterlegt. Die Einverständniserklärung wird archiviert und ist bei Bedarf jederzeit abrufbar. Vorteilhafterweise kann der Anfordernde die Einverständniserklärung zu jedem Zeitpunkt widerrufen.

Falls ein Anfordernder seine angeforderten medizinischen Güter nicht persönlich entgegennehmen kann, sondern eine von ihm benannte Person dazu bevollmächtigt, wird dies vorzugsweise in der Kundendatei vermerkt. Daten von bevollmächtigten Personen können in der Kundendatei mit aufgenommen werden.

Die Kundendatei besteht ferner aus einer Datenbank, die eine Hinterlegung von Dokumenten ermöglicht, wobei die Dokumente mit einer Objekt-ID versehen werden, welche auch den jeweiligen Daten der Kundendatei zugewiesen wird.

Vorzugsweise werden die Adressdaten der Kundendatei mit Adressdaten bereits existierender Adressdatenbanken verifiziert.

Es hat sich als besonders zweckmäßig erwiesen, die Kundendatei kontinuierlich zu aktualisieren, so dass ein Abgleich mit Sterbedaten und Umzugsdaten stattfindet sowie vom Anfordernden gewünschte Änderungen der Daten Eingang in die Kundendatei finden. Die Kundendatei wird einer Versandapotheke zugeordnet.

Es ist ferner zweckdienlich, negative Bonitätsvermerke an den Softwareagenten des Versandapothekers weiterzuleiten. Beispielsweise ergeben sich negative Bonitätsvermerke durch ein negatives Ergebnis der Kreditwürdigkeit durch Abfrage einer externen Datenbank oder im Falle einer falschen Bankverbindung oder im Falle von zuvor dokumentierten unregelmäßigen Zahlungen durch den Anfordernden. Ferner wird vorzugsweise die Pünktlichkeit der Zahlung ausgewertet, so dass bei Unpünktlichkeit der Zahlung der negative Bonitätsvermerk erzeugt wird. Positive Bonitätsvermerke liegen dann vor, falls die vorgenannten Gründe, die zu einem negativen Bonitätsvermerk führen, nicht vorliegen.

Eine weitere Ausführungsform sieht vor, Arzneimittel- oder Produktstammdaten in einer Güterstammdatei zu verwalten, wobei die Verwaltung vorzugsweise für alle Versandapotheken einheitlich ist. Ferner erfolgt die Verwaltung auf Gütergruppenebene, so dass nicht jedes einzelne Gut verwaltet werden muss. Güterbezogene Merkmale wie Transportart, Übergabeart, Arzneimittelverträglichkeit, die für alle zu verwaltenden Güter Geltung finden, werden für mindestens eine Versandapotheke verwaltet, wobei sich die verwalteten Güter im Güterlager befinden.
Es hat sich als besonders vorteilhaft erwiesen, die Güter für mehr als eine Versandapotheke zu verwalten.
Ferner erfolgt eine Festlegung von individuellen Transportkriterien durch den Anfordernden und/oder durch den Softwareagenten des Versandapothekers. Beispielsweise ist ein Transportkriterium die Übergabeart des transportierten medizinischen Gutes. Im Falle von mehr als einer Anforderung durch den Anfordernden erfolgt die Festlegung der individuellen Transportkriterien für jede Anforderung gesondert. Wahlweise erfolgt die Festlegung der individuellen Transportkriterien für alle Anforderungen gleich.

In einer weiteren besonders bevorzugten Ausführungsform der Erfindung werden ein Preis des angeforderten medizinischen Gutes sowie ein Transportpreis des angeforderten medizinischen Gutes ermittelt. Der ermittelte Preis des angeforderten medizinischen Gutes und/oder der Transportpreis des angeforderten medizinischen Gutes werden zur Prüfung einer Kostenübernahme herangezogen.

Zweckmäßigerweise wird die Preisfindung flexibel ausgelegt, so dass der ermittelte Preis des angeforderten medizinischen Gutes jederzeit an Preisfestlegungen adaptiert werden kann. Zudem ist die Preisfindung versandapothekenspezifisch ausgelegt.
Vorteilhafterweise werden innerhalb der Kostenübernahmeprüfung die ermittelten Preise mit den Informationen der Kundendatei zur Ermittlung von Zuzahlungserfordernissen abgeglichen. Ferner können Privatrezepte durch den Abgleich erkannt werden. Die Ergebnisse der Prüfung und der Preisfindung werden an ein Mittel zur Bearbeitung von finanzbuchhalterischen Vorgängen übertragen, so dass automatisch Rechungen generiert werden.

Es hat sich als besonders zweckmäßig erwiesen, dass ein Mittel den Transportweg und die Art der Verpackung aufgrund der Charakteristika des Arzneimittels festlegt.

Ausgewählte Arzneimittel unterliegen beispielsweise einer Thermolabilität, was eine spezielle Verpackung des Arzneimittels zur Erhaltung einer vorgeschriebenen Temperatur erfordert.
Darüber hinaus haben der Anfordernde, der Softwareagent des Versandapothekers und/oder der Softwareagent des Dienstleisters die Möglichkeit, Transportwege und Verpackungsarten festzulegen. Vorteilhafterweise erlaubt das Verfahren den Transport von medizinischen Gütern unterschiedlicher Transport- und Verpackungsarten.

Falls erforderlich werden der Transport und die Verpackungsart des medizinischen Gutes durch den Softwareagenten des Versandapothekers und/oder durch den Softwareagenten des Dienstleisters festgelegt.

Vorteilhafterweise wird das Auftreten von Fehlmedikationen in einer weiteren Ausführungsform der Erfindung durch Vergleich der ausgewerteten Anforderungen mit den Daten der medizinischen Datenbank und/oder durch Überprüfung durch den Softwareagenten des Versandapothekers und/oder den Softwareagenten des Dienstleisters vermieden.
In einer weniger vorteilhaften Ausführungsform übernimmt wahlweise pharmazeutisch geschultes Personal, wie Apotheker und PTA's, eine medizinische Beratung des Anfordernden, wobei eine Beraterauswahl in Abhängigkeit vom aktuellen Beratungsfall stattfindet.

Es hat sich als vorteilhaft erwiesen, zur Beratung auf eine umfangreiche medizinische Datenbank mit hohem Aktualisierungsgrad zuzugreifen. Ferner werden Erklärungen zum Versandhandel von medizinischen Gütern sowie Beratungen zur Gesundheitsvorsorge durch die medizinische Beratung abgedeckt.
Absprachen mit dem verschreibenden Arzt werden wahlweise vorgenommen.

In einer weiteren bevorzugten Ausführungsform erfolgt durch den Softwareagenten des Dienstleisters eine Verwaltung der logistischen Prozesse einer Lagerhaltung der medizinischen Güter der Versandapotheke, zu der der Transport der bestellten Güter vom Güterlager zum Zielort gehört.

In einer bevorzugten Ausführungsform wird ein Rücktransport vom Zielort zum ersten Lager im Falle eines negativen Ergebnisses einer Annahmekontrolle des Anfordernden ausgelöst. Damit der Rücktransport im Sinne des erfindungsgemäßen Verfahrens zu Recht erfolgt, müssen vom Dienstleister und/oder vom Apotheker festgelegte Kontrollkriterien nicht erfüllt sein. Im Falle, dass mindestens ein Kontrollkriterium nicht erfüllt ist, ergibt sich ein negatives Ergebnis. Beispiele für Kontrollkriterien sind eine Unversehrtheit des transportierten medizinischen Gutes, ein Bestand des medizinischen Gutes, die Übereinstimmung zwischen dem transportierten medizinischen Gut und dem angeforderten medizinischen Gut. Ein weiteres Kontrollkriterium ist eine Entgegennahme eines geforderten Nachnahmebetrages. Vom Anfordernden festgelegte Kontrollkriterien, die nicht mit den vom Dienstleister und/oder vom Apotheker festgelegten Kontrollkriterien übereinstimmen, können auch zu einem negativen Ergebnis führen, welches den Rücktransport auslöst, allerdings erfolgt der Rücktransport unter diesem Umständen zu Unrecht. Beispielsweise erfolgt der Rücktransport aufgrund einer verweigerten Annahme durch den Anfordernden zu Unrecht.

In einem besonders bevorzugten Ausführungsbeispiel werden die Lagerung, eine Kommissionierung und der Transport der medizinischen Güter funktional und räumlich zusammenhängend ermöglicht.

Erfindungsgemäß wird die vorgenannte Aufgabe in Verbindung mit dem Oberbegriff des Patentanspruchs 64 dadurch gelöst, dass die Mittel zur Erfassung und Auswertung der Anforderung, die Mittel zur Bestellung und Überprüfung des erhaltenen medizinischen Gutes sowie die Mittel zum Transport des medizinischen Gutes mit einem Mittel zur Steuerung verbunden sind.

Die erfindungsgemäße Verbindung der Mittel zur Erfassung und Auswertung der Anforderung, der Mittel zur Bestellung und Überprüfung des erhaltenen medizinischen Gutes sowie der Mittel zum Transport des medizinischen Gutes mit dem Mittel zur Steuerung führt zu einer zentralisierten Überwachung und Steuerung der Systemabläufe, was eine außerordentlich hohe Zuverlässigkeit garantiert.

Ferner weist die erfindungsgemäße Verbindung den Vorteil auf, räumlich wie funktional getrennte Mittel zur Bearbeitung eines Vorgangs aufeinander abzustimmen.

Vorteilhafte Weiterbildungen des Systems sind Gegenstand der Ansprüche 65 bis 70.

In einem besonders bevorzugten Ausführungsbeispiel überwacht das Mittel zur Steuerung die Sendungsverfolgung des medizinischen Gutes.

Ferner hat es sich als zweckmäßig erwiesen, dass das Mittel zur Steuerung eine Verbindung zwischen einem Dienstleister und einer Versandapotheke herstellt.

Zudem ermöglicht eine weitere Ausführungsform einen Transfer der erfassten und ausgewerteten Anforderungen zwischen dem Dienstleister und der Versandapotheke durch das Mittel zur Steuerung.

In einer weiteren besonders bevorzugten Ausführungsform ist das Mittel zur Steuerung mit Mitteln zur Digitalisierung der erfassten Anforderungen, mit Mitteln zur digitalen Signierung von elektronischen Anforderungen, mit Mitteln zur Lagerverwaltung des medizinischen Gutes und mit einer medizinischen Datenbank sowie einer Adressdatenbank verbunden.

Ferner steht das Mittel zur Steuerung mit Mitteln zur Finanz- und Debitorenbuchhaltung, mit Mitteln zur Kostenübernahmeprüfung, mit Mitteln zur Preisfindung und mit Mitteln zur Bonitätsprüfung in Verbindung.

In einer besonders bevorzugten Ausführungsform ist das Mittel zur Steuerung dem Dienstleister zugeordnet.
Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildung.

### Beschreibung der Zeichnung

Die Figur zeigt eine graphische Darstellung der Verfahrensabläufe nach Eingang einer Anforderung von verschreibungspflichtigen Arzneimitteln.

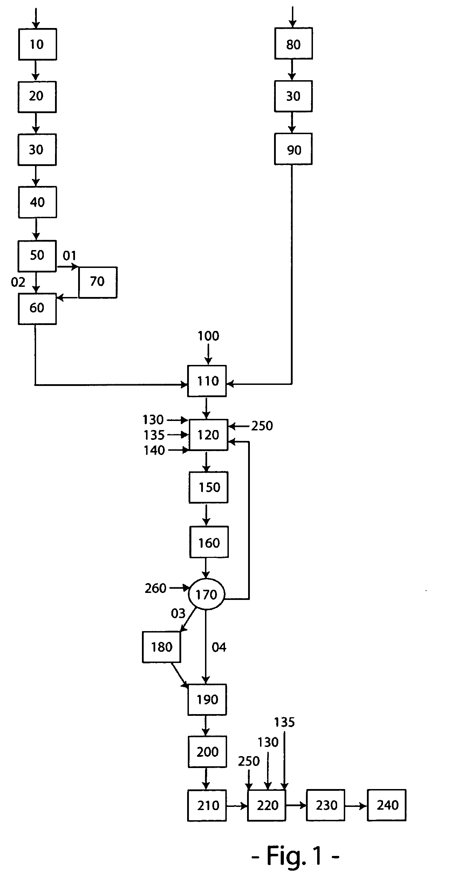

Figur 1 veranschaulicht anhand eines Ablaufdiagramms die Verfahrensschritte eines besonders bevorzugten Ausführungsbeispiels der Erfindung im Falle der Bearbeitung der Anforderungen von rezeptpflichtigen Arzneimitteln. Die in Figur 1 dargestellten Schritte 10 bis 70 beschreiben die Abläufe für postalisch eingegangene Anforderungen, während die Schritte 80, 30 und 90 Abläufe für das eRezept angeben. Die Verfahrensschritte 100 bis 260 sind beiden vorgenannten Abläufen gemeinsam.

Teil einer verschreibungspflichtigen Anforderung ist immer ein vom verschreibenden Arzt ordnungsgemäß ausgefülltes Rezept. Falls der verschreibende Arzt es für notwendig erachtet, einem Patienten ein nicht rezeptpflichtiges Arzneimittel zu verschreiben, kann er hierfür ein Rezept ausstellen. Das heißt, ein Arzneimittel kann vom verschreibenden Arzt verschrieben werden, auch wenn es nicht rezeptpflichtig ist.
Die Anforderung 10 geht beispielsweise auf postalischem Wege ein. Das Rezept muss im Original eingereicht werden. Vorzugsweise legt der Anfordernde der Anforderung ein komplett ausgefülltes Bestellformular mit personenbezogenen Angaben für die Kundendatei bei. Die Bestellformulare werden vom Hersteller, von den Gesetzlichen Krankenversicherungen bzw. den Privaten Krankenversicherungen, vom verschreibenden Arzt, vom Versandapotheker oder vom Dienstleister zur Verfügung gestellt.
Ferner kann der Dienstleister die Verteilung der Bestellformulare an die Anfordernden übernehmen.

Nach erfolgtem postalischen Zugang der nicht-elektronischen Anforderung 10 wird das Rezept, welches sich aus Datenschutzgründen innerhalb eines Umschlages befindet, dem Umschlag entnommen, wobei ferner eine Inhaltsprüfung 20 der zugegangenen Anforderung vorgenommen wird. Bestandteil der Inhaltsprüfung ist eine Sortierung von Anforderungen nach Anfordernden sowie eine Vollständigkeitsprüfung der Anforderungen.

Der Umschlag weist eine Kennung der zuständigen Versandapotheke auf, so dass eine eindeutige Zuordnung der Anforderung zur jeweiligen Versandapotheke entsteht.
Im Zuge der Inhaltsprüfung wird zudem überprüft, ob neben dem Rezept bzw. den Rezepten noch nicht verschreibungspflichtige Rezepte dem Umschlag beiliegen. Sollten sich innerhalb des Umschlages nicht verschreibungspflichtige Anforderungen befinden, werden selbige den zugehörigen Verfahrensschritten zur Erfassung und Auswertung von nicht verschreibungspflichtigen Anforderungen zugeführt.

Anschließend werden die aus den Umschlägen entnommenen schriftlichen Rezepte und/oder Bestellformulare nach Anfordernden sortiert 30. Die sortierten Rezepte und/oder Bestellformulare werden hinterher gescannt und somit digitalisiert sowie Zeichen extrahiert 40. Es ergeben sich elektronische Abbilder zur Weiterverarbeitung durch die sich anschließende Überprüfung auf elektronische Lesbarkeit 50.
Für den Fall, dass das Rezept und/oder das Bestellformular elektronisch gelesen werden kann 02, wird es maschinell erfasst. Ist eine elektronische Lesbarkeit nur teilweise oder gar nicht möglich 01, erfolgt eine manuelle Erfassung 70, was wiederum zu elektronischen Abbildern führt.

Darüber hinaus erfolgen die Extraktion von erforderlichen Ankreuzfeldern (z. B. Krankenkasse) und die Erzeugung einer Krankenkassenkennung 60. Die Informationen sind in Umfang und Vollständigkeit derart zu erfassen, dass sie den Anforderungen der Krankenkassen hinsichtlich späterer Abrechnung genügen.

In einem anschließenden Verifikationsschritt 110 werden durch das Einspielen von Referenzdaten 100 Rezept und Bestellformular inhaltlich zu 100 % erkannt (d.h., sie sind komplett lesbar, ordnungsgemäß ausgefüllt und unterschrieben etc.) oder durch eine Qualitätssicherung zunächst nachbearbeitet bzw. korrigiert, um im Anschluss als ordnungsgemäß erkannt zu werden.

Im Falle der verschreibungspflichtigen Anforderung durch das eRezept 80 werden nach erfolgtem Eingang der Anforderung dieselben nach Anfordernden sortiert 30. Das eRezept wird, falls erforderlich, in ein standardisiertes Format durch Konvertierung 90 überführt. Hieran anschließend findet die Verifikation 110 der Informationen der Anforderung statt.

Die Plausibilitätsprüfung 120 der eingehenden Anforderungen erfolgt durch den Softwareagenten des Versandapothekers 130 und/oder durch den Softwareagenten des Dienstleisters 135. Dabei wird geprüft, ob sich die bestellten Arzneimittel negativ beeinflussen bzw. ein Zusammenhang mit der bereits bestehenden Medikation des Anfordernden existiert. Hierzu wird auf die Kundendatei 170 sowie auf eine medizinische Datenbank 250 zugegriffen. Im Bedarfsfall werden je nach Situation der Anfordernde, der Softwareagent der zuständigen Versandapotheke 130 und/oder ein Softwareagent des verschreibenden Arztes 140 kontaktiert, um die weitere Vorgehensweise festzulegen.
Zur Gewährleistung der revisionssicheren Sendungsverfolgung einerseits und in Vorbereitung auf eine optimale Langzeitarchivierung andererseits sowie in Vorbereitung der Abrechnung gegenüber den Gesetzlichen Krankenversicherungen und den Anfordernden wird mittels Zeitstempeltechnologie das elektronische Abbild mit einer Signatur versehen 150. So wird für eine Unverkennbarkeit der Abbilder gesorgt. Ferner sorgt der Einsatz von Verschlüsselungstechnologie für eine sichere Übertragung von Daten zum Versandapotheker und letztendlich zur Gesetzlichen Krankenversicherung zwecks Abrechnung.

Die Informationen werden anschließend archiviert 160. Eine Datenarchivierung darf nur nach Einwilligung des Anfordernden (mit Widerrufsoption) erfolgen.

Die Informationen dienen zum Aufbau und zur Aktualisierung der Kundendatei 170.
Erst nach vollständiger Eingabe der erforderlichen Daten der Kundendatei und anschließender Verifikation mittels einer Adressdatenbank 260 wird mit der Durchführung der Bonitätsprüfung 180 begonnen 03. Erfolgte bereits bei der Bearbeitung einer vorhergehenden Anforderung die Bonitätsprüfung mit positivem Bonitätsvermerk (zum Vorteil des Anfordernden) für den Anfordernden, wird ohne nochmalige Bonitätsprüfung die Kostenübernahmeprüfung 190 direkt 04 im Anschluss an die Aktualisierung der Kundendatei angestoßen.

Die Prüfung der Bonität 180 wird mit Hilfe eines separaten Bonitätsprüfungssystems ausgeführt. Sollte sich aufgrund der Bonitätsprüfung ein negativer Bonitätsvermerk ergeben (zum Nachteil des Anfordernden), wird der Softwareagent des Versandapothekers kontaktiert.

Hierfür werden in Abstimmung mit jedem Versandapotheker Bonitätsmerkmale festgelegt, die kontinuierlich gepflegt werden.

Falls nicht bereits eine Kundennummer beziehungsweise eine Bestellnummer für den Anfordernden existiert, wird dem Anfordernden im Anschluss an eine erfolgreiche Adressverifikation, eine positive Bonitätsprüfung und einer positiven Prüfung des Zielortes die Kundennummer beziehungsweise die Bestellnummer zugeteilt. Ab diesem Zeitpunkt wird die Kundennummer auf allen Unterlagen an den Anfordernden vermerkt, insbesondere auf Lieferschein und Rechnung, um eine eindeutige Zuordnung vornehmen zu können.

Bei Vorliegen einer rezeptpflichtigen Bestellung wird geprüft, zu wessen Lasten die Bestellung geht 190. Handelt es sich um ein Privatrezept, trägt der Anfordernde die Kosten. Ein Privatrezept kann sowohl von privat Versicherten als auch von gesetzlich Versicherten eingereicht werden. Liegt ein Rezept vor, das gegenüber der Gesetzlichen Krankenversicherung abrechenbar ist, erfolgt im zweiten Schritt durch Abgleich mit den Daten der Kundendatei die Überprüfung, ob der Kunde von der Zuzahlung des gesetzlich festgelegten Eigenanteils befreit ist. In diesem Fall übernimmt die Gesetzliche Krankenversicherung die vollen Kosten der Bestellung.

Bei Vorliegen einer nicht rezeptpflichtigen Bestellung übernimmt beispielsweise der Anfordernde die Kosten.

Die Ergebnisse der Prüfungen werden elektronisch an die Finanzbuchhaltung 240 zwecks Aktivierung/Generierung der Rechnungen weitergeleitet.

Im Rahmen einer Preisfindung 200 wird der Preis des medizinischen Gutes unter Berücksichtigung aller damit verbundenen Konditionen, wie z. B. Preisstaffelung, ermittelt. Die Ergebnisse der Preisfindung werden elektronisch an die Finanzbuchhaltung 240 zwecks Aktivierung/Generierung der Rechungen weitergeleitet.

Der Softwareagent des Versandapothekers und/oder der Softwareagent des Dienstleisters legen aufgrund der in der Güterstammdatei hinterlegten Charakteristika des Arzneimittels den Transportweg fest 210. Darüber hinaus wird geprüft, ob seitens des Versandapothekers bzw. des Anfordernden spezifische Transportkriterien vorliegen. Beinhaltet die Warensendung Arzneimittel mit unterschiedlichen Anforderungen an den Transport, ist das Arzneimittel mit den höchsten Anforderungen ausschlaggebend. Alternativ kann nach Absprache mit dem zuständigen Versandapotheker eine Teilung des Transports erwirkt werden.

Der Softwareagent des Versandapothekers 130 und/oder der Softwareagent des Dienstleisters 135 ermöglichen in Verbindung mit der medizinischen Datenbank 250 eine gezielte medizinische Beratung 220 auf Wunsch des Anfordernden.
In besonderen Beratungsfällen ist eine Weiterleitung zu dem zuständigen Versandapotheker vorgesehen. Sofern erforderlich, nimmt der Dienstleister Kontakt zum verschreibenden Arzt auf.

Die Versandapotheke verfügt ebenso wie der Dienstleister über eine eigene Lager- und Logistik-Infrastruktur. Damit sind die Versandapotheke und/oder der Dienstleister von der Lagerverwaltung über die Kommissionierung bis hin zur Übergabe der bestellten Güter an den Transporteur zuständig.
Die Versandapotheke wickelt bedarfsweise in Eigenverantwortung Aufträge vom Anfordernden ab, die durch den Dienstleister übermittelt werden. Die Kommunikation zwischen dem Zentralen Kundenservice des Dienstleisters und der Versandapotheke wird mit Hilfe einer Schnittstelle realisiert.

Der Verfahrensschritt Logistik und Transport 230 unterteilt sich u.a. in die Bereiche Chargenverwaltung und/oder Bestandsprüfung/Warendisposition und/oder eine Erfassung eines Haltbarkeitsdatums des medizinischen Gutes. Femer werden Lieferscheine angefertigt. In einem weiteren Ausführungsbeispiel der Erfindung übernimmt der Dienstleister im Auftrag der Versandapotheke den Transport der angeforderten Güter.

Der Transport gliedert sich in den Versand der Anforderung zur Versandapotheke in dafür vorgefertigte Umschläge, in eine Einlieferung der beim Hersteller bestellten medizinischen Güter in dafür geeignete Verpackungen, in den Transport der Güter zum Zielort unter Gewährleistung einer fortwährenden Sendungsverfolgung und Transport von thermolabilen Arzneimitteln und letztendlich in eine Zustellung der Güter.

Innerhalb der Chargenverwaltung findet vorzugsweise eine Zuordnung von produzierten Serien von Arzneimitteln, die jeweils über bestimmte Charakteristika verfügen, statt. Eine Chargennummer ermöglicht die eindeutige Zuordnung von Arzneimitteln zu einer Charge. Rückrufaktionen bei unvorhergesehenen Vorfällen wie Unverträglichkeit sind anhand der Chargennummer problemlos möglich.

In einem ersten Schritt der Bestandsprüfung wird festgestellt, ob die bestellten Güter im Güterlager vorrätig sind. Dafür wird eine Anfrage an eine Lagerverwaltung des Versandapothekers gestellt.
Sollten einzelne Güter nicht vorrätig sein, entscheidet der Versandapotheker, ob eine Teillieferung vorgenommen wird oder ob ein vollständiger Transport der Güter erst nach Eingang der fehlenden Güter erfolgt.

Die im Güterlager befindlichen Güter werden zur Bestellung reserviert, jedoch nicht abgebucht. Die Abbuchung vom Lagerbestand erfolgt erst bei Meldung der tatsächlichen Sendungsübergabe. Eine Abbuchungsinformation kann entweder über eine Schnittstelle per Datentransfer aus dem System der Versandapotheke in das System des Dienstleisters übertragen werden oder direkt im System des Dienstleisters erfolgen.

Im Zusammenhang mit der Anforderung werden Lieferpapiere fakturiert, die eine oder mehrere der folgenden Angaben enthalten:
- Rechnung (Abrechnung mit PKV-Patienten, Abrechnung des Eigenanteils bzw. von Privatrezepten mit GKV-Patienten und Abrechnung bei nicht rezeptpflichtigen Bestellungen). Die Rechnungen werden in der Finanzbuchhaltung aktiviert/generiert. Bei Vorauszahlung wird den Lieferpapieren ein Rechnungsduplikat mit entsprechendem Vermerk beigelegt.
- Lieferschein,
- Rezeptduplikat in digitalisierter Form zum Aufdruck des Preises in elektronischer Form (→ Overlay Technologie),
- Handelt es sich beim Anfordernden um einen Privatpatienten, erfolgt ein Ausdruck der Rezeptduplikate,
- (Kommunikations-)Unterlagen für zukünftige Bestellungen,
- Aufkleber mit dem Namen des Anfodernden - pro Gut und Menge.
- Angaben zu den Versandbedingungen.

Es hat sich als besonders zweckmäßig erwiesen, das Rezept und/oder das Rezeptduplikat mit mindestens einem digitalen Stempel zu versehen, wobei der digitale Stempel den gesetzlichen Erfordernissen des Versandes von medizinischen Gütern entspricht. Beispielsweise gibt der digitale Stempel eine Unterschrift eines Versandapothekers wieder.

Im Anschluss werden die Daten elektronisch übermittelt und für die Logistik des Versandapothekers bereitgestellt. Der Dienstleister übernimmt die Zustellung der medizinischen Güter an den Anfordernden.

Die Mittel zur Ausführung einer Debitoren- und Finanzbuchhaltung 240 ermöglichen die Übernahme von Auftrags- und Zahlungsdaten, die Pflege und Verwaltung von offenen Posten, die Übernahme eines Mahnwesens, die Auswertungen für die Versandapotheke und die Beratung der Anfordernden und Versandapotheker bei abrechnungsrelevanten Fragen.

Das Mittel zur Ausführung der Debitoren- und Finanzbuchhaltung 240 übermittelt die Auftrags- / Zahlungsdaten elektronisch an die Debitoren- und Finanzbuchhaltung. Vorzugsweise werden die Auftrags- / Zahlungsdaten elektronisch an die Debitoren- und Finanzbuchhaltung übermittelt, sobald sich das medizinische Gut im Warenausgang der Versandapotheke befindet.
Die Auftrags- / Zahlungsdaten werden durch das Auftragssystem übernommen und fakturiert. Als Zahlwege zur Begleichung der Rechnung gelten das Lastschriftverfahren, die Zahlung per Kreditkarte oder sonstige Inkassoleistungen.

Die ausstehenden Forderungen, das heißt die zu zahlenden Eigenanteile von gesetzlich Versicherten sowie die Rechnungsbeträge aufgrund nicht rezeptpflichtiger Bestellungen bzw. Bestellungen mittels Privatrezept gehen zunächst beim Dienstleister ein, zur Überweisung an die Versandapotheke.

Sobald das medizinische Gut zugestellt wurde, erhält das Mittel zur Ausführung einer Debitoren- und Finanzbuchhaltung 240 vom Warenausgang der Versandapotheke eine entsprechende Mitteilung, wonach eine Abrechnungsfrist für den Anfordernden beginnt. Diese Frist ist relevant für die Prüfung der offenen Posten und damit einhergehend für die Überwachung und Verbuchung der Zahlungseingänge.

Für den Fall, dass eine Bezahlung im Voraus erfolgte, meldet das Mittel zur Ausführung einer Debitoren- und Finanzbuchhaltung 240 den Zahlungseingang an die Logistik 230 des Versandapothekers.

Liegt eine Vereinbarung über eine Übernahme von Forderungsausfällen durch den Dienstleister vor, erhält der Versandapotheker wahlweise unmittelbar vom Mittel zur Ausführung einer Debitoren- und Finanzbuchhaltung 240 die erstellte Abrechnung postalisch und/oder elektronisch zugesandt.

Wurde keine Übernahme von Forderungsausfällen vereinbart, erfolgt ein Abgleich der Abrechnung mit den erfolgten Zahlungseingängen inklusive der Außenstände aus Vorperioden. Liegt keine Differenz vor, wird die Überweisung vorgenommen und der Versandapotheker erhält seine Abrechnung. Wahlweise werden alle verbuchten Zahlungseingänge an den Versandapotheker überwiesen, die Abrechnung korrigiert und zugestellt.

Ist die Rechnung mit Ablauf der Abrechnungsfrist nicht beglichen, wird das Mahnwesen unter Einbeziehung von Inkassounternehmen aktiviert.

Das Mittel zur Ausführung einer Debitoren- und Finanzbuchhaltung 240 erstellt turnusmäßig für die jeweiligen Versandapotheker bedarfsgerechte Auswertungen nach einem oder mehreren der folgenden Kriterien:
- monatlicher Abrechnungsnachweis der kompletten Rezeptabrechnung, Differenzbeleg: im Fall von unvollständigen oder nicht korrekt ausgefüllten Rezepten oder elektronischen Abbildern, die zur Nichtabrechnungsfähigkeit führen. Die Differenzbelege inkl. der zugehörigen Rezepte geben Auskunft über die Art der Differenz, z. B. fehlende Arztstempel oder Unterschriften.
- Umsatzstatistik und Umsatzvergleichszahlen,
- statistische Auswertungen wie Bruttoumsatz, Rezeptdurchschnittswerte und Rezeptanzahl,

Das Mittel zur Ausführung einer Debitoren- und Finanzbuchhaltung 240 übernimmt ferner die Beratung der Anfordernden und Versandapotheker bei allen abrechnungsrelevanten Fragen. Telefonisch beim Dienstleister eingehende Anfragen werden an das Mittel zur Ausführung einer Debitoren- und Finanzbuchhaltung 240 weitergeleitet und dort bearbeitet.

### Bezugszeichenliste

- **01**: Nicht lesbar
- **02**: Lesbar
- **03**: Keine vorherige Bonitätsprüfung
- **04**: Vorherige Bonitätsprüfung
- **10**: Postalische Anforderung
- **20**: Inhaltsprüfung
- **30**: Sortierung
- **40**: Digitalisierung
- **50**: Überprüfung auf elektronische Lesbarkeit
- **60**: Ermittlung der Krankenkassenkennung
- **70**: Manuelle Erfassung
- **80**: eRezept
- **90**: Konvertierung
- **100**: Referenzdaten
- **110**: Verifikation
- **120**: Plausibilitätsprüfung
- **130**: Softwareagent des Versandapothekers
- **135**: Softwareagent des Dienstleisters
- **140**: Softwareagent des Arztes
- **150**: Digitale Signierung
- **160**: Archivierung
- **170**: Kundendatei
- **180**: Bonitätsprüfung
- **190**: Kostenübernahmeprüfung
- **200**: Preisfindung
- **210**: Bestimmung des Transportweges
- **220**: Medizinische Beratung
- **230**: Logistik und Transport
- **240**: Mittel zur Ausführung der Debitoren- und Finanzbuchhaltung
- **250**: Medizinische Datenbank
- **260**: Adressdatenbank

## Patentansprüche

1. Verfahren zur Bearbeitung mindestens einer Anforderung eines medizinischen Gutes, wobei das medizinische Gut ein Arzneimittel und/oder ein medizinisches Produkt ist, mit Mitteln zur Erfassung der Anforderung und Mitteln zur Auswertung von Abbildern der Anforderung, sowie mit Mitteln zur Bestellung und Überprüfung des erhaltenen medizinischen Gutes sowie mit Mitteln zum Transport des medizinischen Gutes, wobei die Anforderung mindestens Daten eines Anfordernden und Daten über einen Zielort des Transportes aufweist,
**dadurch gekennzeichnet,**
**dass** die Anforderung erfasst und als ein elektronisches Abbild auf einer graphischen Benutzeroberfläche dargestellt wird, und dass die Anforderung und/oder das elektronische Abbild zur Bestimmung des medizinischen Gutes ausgewertet werden, wobei ferner die Auswertung zu mindestens einem Ergebnis führt, so dass im Falle eines Ergebnisses A das elektronische Abbild der Anforderung gespeichert wird und eine Bestellung des medizinischen Gutes unterbleibt, und dass ferner im Falle eines Ergebnisses B das elektronische Abbild der Anforderung gespeichert und mindestens ein medizinisches Gut bestellt wird, so dass nach Erhalt des medizinischen Gutes im Falle eines Ergebnisses C einer zweiten Auswertung zur Überprüfung des erhaltenen medizinischen Gutes der Transport des medizinischen Gutes zum Zielort erfolgt, wobei ferner eine Sendungsverfolgung des medizinischen Gutes erfolgt, und im Falle eines Ergebnisses D der zweiten Auswertung der Transport des medizinischen Gutes zum Zielort unterbleibt.

2. Verfahren nach Anspruch 1,
**dadurch gekennzeichnet,**
**dass** der Anfordernde im Falle des Ergebnisse A über das Unterbleiben und die Gründe des Unterbleibens der Bestellung in Kenntnis gesetzt wird, und das ferner der Anfordernde im Falle des Ergebnisses D über das Unterbleiben und die Gründe des Unterbleibens des Transportes in Kenntnis gesetzt wird.

3. Verfahren nach einem oder beiden der Ansprüche 1 und 2 ,
**dadurch gekennzeichnet,**
**dass** die Sendungsverfolgung des medizinischen Gutes beim Transport zum Zielort durch einen ein- oder zweidimensionalen Identifikationscode am Gut und/oder an der Verpackung des Gutes ermittelt wird.

4. Verfahren nach einem oder mehreren der vorgenannten Ansprüche,
**dadurch gekennzeichnet,**
**dass** die Mittel zur Erfassung und Auswertung der Anforderung, die Mittel zur Bestellung und Überprüfung des medizinischen Gutes sowie die Mittel zum Transport des medizinischen Gutes mit einem Softwareagenten eines Versandapothekers und/oder mit einem Softwareagenten eines Dienstleisters verbunden sind.

5. Verfahren nach einem oder mehreren der vorgenannten Ansprüche,
**dadurch gekennzeichnet,**
**dass** die Verbindung der Softwareagenten unter Berücksichtigung bestehender Systeme seitens der Versandapotheke erfolgt.

6. Verfahren nach einem oder mehreren der vorgenannten Ansprüche,
**dadurch gekennzeichnet,**
**dass** zum Transfer der Anforderungen eine geeignete Schnittstelle zwischen dem Dienstleister und der Versandapotheke konfiguriert wird.

7. Verfahren nach einem oder mehreren der vorgenannten Ansprüche,
**dadurch gekennzeichnet,**
**dass** der Anfordernde eine Anforderung mit oder ohne Rezept dem Softwareagenten des Versandapothekers oder eine Anforderung ohne Rezept dem Softwareagenten des Dienstleisters übermittelt.

8. Verfahren nach einem oder mehreren der vorgenannten Ansprüche,
**dadurch gekennzeichnet,**
**dass** eine Unterteilung der Anforderungen in verschreibungspflichtige und nicht verschreibungspflichtige Anforderungen erfolgt.

9. Verfahren nach einem oder mehreren der vorgenannten Ansprüche,
**dadurch gekennzeichnet,**
**dass** die Anforderung postalisch, per Telefon, unter Benutzung eines Fax-Gerätes oder mittels eines Internet-Zuganges durch ein vom Dienstleister zur Verfügung gestelltes Portal erfolgt.

10. Verfahren nach einem oder mehreren der vorgenannten Ansprüche,
**dadurch gekennzeichnet,**
**dass** eine telefonische Anforderung als elektronisches Abbild archiviert wird.

11. Verfahren nach einem oder mehreren der vorgenannten Ansprüche,
**dadurch gekennzeichnet,**
**dass** schriftliche Anforderungen vorgeprüft und nach Anfordernden sortiert werden.

12. Verfahren nach einem oder mehreren der vorgenannten Ansprüche,
**dadurch gekennzeichnet,**
**dass** die Anforderung verschreibungspflichtiger Arzneimittel als elektronisches Rezept erfolgt.

13. Verfahren nach einem oder mehreren der vorgenannten Ansprüche,
**dadurch gekennzeichnet,**
**dass** das elektronische Rezept vom Computer eines verschreibenden Arztes oder vom Computer des Patienten elektronisch bei der Versandapotheke und/oder beim Dienstleister eingelöst wird.

14. Verfahren nach einem oder mehreren der vorgenannten Ansprüche,
**dadurch gekennzeichnet, dass** das elektronische Rezept ein Informationsbestandteil einer Krankenkassenkarte ist.

15. Verfahren nach einem oder mehreren der vorgenannten Ansprüche,
**dadurch gekennzeichnet,**
**dass** das elektronische Rezept auf einer Diskette, einer CD-ROM, einer DAT und/oder einem Memorystick gespeichert ist.

16. Verfahren nach einem oder mehreren der vorgenannten Ansprüche,
**dadurch gekennzeichnet,**
**dass** eine Datenkorrektur des elektronischen Rezeptes durch eine Konvertierung der elektronischen Daten erfolgt.

17. Verfahren nach einem oder mehreren der vorgenannten Ansprüche,
**dadurch gekennzeichnet,**
**dass** ein Mittel zur Digitalisierung und Erkennung elektronische Abbilder der grafischen Oberfläche des Rezeptes erzeugt, wobei eine Krankenkassenkennung ermittelt wird.

18. Verfahren nach einem oder mehreren der vorgenannten Ansprüche,
**dadurch gekennzeichnet,**
**dass** eine Überprüfung auf elektronische Lesbarkeit der elektronischen Abbilder erfolgt, wobei im Falle einer teilweisen oder nicht vorhandenen elektronischen Lesbarkeit der Softwareagent des Versandapothekers und/oder der Softwareagent des Dienstleisters eine Lesbarkeit der elektronischen Abbilder überprüft.

19. Verfahren nach einem oder mehreren der vorgenannten Ansprüche,
**dadurch gekennzeichnet,**
**dass** eine Optimierung der elektronischen Lesbarkeit durch Referenzdaten erfolgt, wobei die Referenzdaten Informationen über eine medikamentöse Vorgeschichte des Anfordernden, Adressdaten des Anfordernden sowie Stammdaten von Arzneimitteln beinhalten.

20. Verfahren nach einem oder mehreren der vorgenannten Ansprüche,
**dadurch gekennzeichnet,**
**dass** die lesbaren Abbilder mit einer digitalen Signatur versehen werden.
Verfahren nach einem oder mehreren der vorgenannten Ansprüche,
**dadurch gekennzeichnet,**
**dass** die Signatur mittels Zeitstempeltechnologie erfolgt.

21. Verfahren nach einem oder mehreren der vorgenannten Ansprüche,
**dadurch gekennzeichnet,**
**dass** die lesbaren Abbilder und/oder das elektronische Rezept auf Plausibilität geprüft werden, so dass medizinisch ungewollte Anforderungen unterbleiben.

22. Verfahren nach einem oder mehreren der vorgenannten Ansprüche,
**dadurch gekennzeichnet,**
**dass** auf Kontraindikationen mit bereits verschriebenen Arzneimitteln geprüft wird.

23. Verfahren nach einem oder mehreren der vorgenannten Ansprüche,
**dadurch gekennzeichnet,**
**dass** die Plausibilitätsprüfung Stammdaten von registrierten und erhältlichen Arzneimitteln heranzieht, wobei im Falle einer eindeutigen Zuordnung zu einem Arzneimittel die lesbaren Abbilder und/oder das elektronische Rezept archiviert werden.

24. Verfahren nach einem oder mehreren der vorgenannten Ansprüche,
**dadurch gekennzeichnet,**
**dass** ein Ausbleiben der eindeutigen Zuordnung zu einer Bewertung der lesbaren Abbilder durch den Softwareagenten des Versandapothekers und/oder durch den Softwareagenten des Dienstleisters führt.

25. Verfahren nach einem oder mehreren der vorgenannten Ansprüche,
**dadurch gekennzeichnet,**
**dass** ein Ausbleiben der eindeutigen Zuordnung durch die Bewertung zu einer Kontaktierung des Softwareagenten des verschreibenden Arztes führt, so dass eine Zuordnung erfolgt.

26. Verfahren nach einem oder mehreren der vorgenannten Ansprüche,
**dadurch gekennzeichnet,**
**dass** festgestellt wird, ob die lesbaren Abbilder einem verschreibungspflichtigen Rezept entsprechen.

27. Verfahren nach einem oder mehreren der vorgenannten Ansprüche,
**dadurch gekennzeichnet,**
**dass** die Anforderung von rezeptpflichtigen Arzneimitteln durch eine nicht autorisierte Person verhindert wird.

28. Verfahren nach einem oder mehreren der vorgenannten Ansprüche,
**dadurch gekennzeichnet,**
**dass** Informationen der Anforderung in einer Kundendatei abgelegt werden, wobei die Kundendatei pro Anfordernden einen oder mehreren der folgenden Eintragungen beinhaltet:
- Kundennummer,
- Bestellnummer
- Adressdaten,
- Einverständniserklärung vom Anfordernden zur Registrierung von Daten über den Anfordernden und medizinischen Daten,
- Daten über den Zielort des Transports,
- Angaben über eine bevollmächtigte Person zur Entgegennahme der Ware,
- persönliche Daten (z. B. Geburtsdatum und Geschlecht),
- Angaben zur Bonität,
- Angaben zum Zahlungsverkehr (z. B. Kontoverbindung, Kreditkartennummer),
- Einzugsermächtigung zum Lastschriftverfahren,
- Angaben zur Art der Versicherung sowie damit in Verbindung stehende Kontaktadressen,
- Kostenträger, mit Kennung, Anschrift und Kontaktdaten,
- Angaben über den Hausarzt und weitere behandelnde Ärzte mit Zulassungsinformationen, Namen, Anschrift, Kontaktdaten,
- medikamentöse Vorgeschichte,
- Patientennummer,
- Versicherungsnummer,
- Kontakthistorie,
- Historie der Medikation,
wobei ferner eine schriftliche und/oder elektronische Einverständniserklärung zur Registrierung der Informationen sowie von medizinischen Daten hinterlegt wird.

29. Verfahren nach einem oder mehreren der vorgenannten Ansprüche,
**dadurch gekennzeichnet,**
**dass** die Kundendatei einer Versandapotheke zugeordnet wird.

30. Verfahren nach einem oder mehreren der vorgenannten Ansprüche,
**dadurch gekennzeichnet,**
**dass** die Einverständniserklärung abrufbar und durch den Anfordernden widerrufbar ist.

31. Verfahren nach einem oder mehreren der vorgenannten Ansprüche,
**dadurch gekennzeichnet,**
**dass** in der Kundendatei eine Hinterlegung von Dokumenten ermöglicht wird, wobei die Dokumente mit einer Objekt-ID versehen werden, welche auch den jeweiligen Daten der Kundendatei zugewiesen wird.

32. Verfahren nach einem oder mehreren der vorgenannten Ansprüche,
**dadurch gekennzeichnet,**
**dass** die Kundendatei auf Verifikation überprüft wird.

33. Verfahren nach einem oder mehreren der vorgenannten Ansprüche,
**dadurch gekennzeichnet,**
**dass** Daten einer zur Entgegennahme des medizinischen Gutes bevollmächtigten Person in die Kundendatei aufgenommen werden.

34. Verfahren nach einem oder mehreren der vorgenannten Ansprüche,
**dadurch gekennzeichnet,**
**dass** die in der Kundendatei vermerkten Adressdaten mit Adressdaten bereits existierender Adressdatenbanken verifiziert werden.

35. Verfahren nach einem oder mehreren der vorgenannten Ansprüche,
**dadurch gekennzeichnet,**
**dass** infolge einer Aktualisierung der Kundendatei ein Abgleich mit Sterbedaten und Umzugsdaten stattfindet sowie vom Anfordernden gewünschte Änderungen der Daten Eingang in die Kundendatei finden.

36. Verfahren nach einem oder mehreren der vorgenannten Ansprüche,
**dadurch gekennzeichnet,**
**dass** das medizinische Gut anhand elektronischer Abbilder und anhand der elektronischen Abbilder der grafischen Oberfläche der Anforderung sowie durch den Softwareagenten des Versandapothekers und/oder durch den Softwareagenten des Dienstleisters überprüft wird.

37. Verfahren nach einem oder mehreren der vorgenannten Ansprüche,
**dadurch gekennzeichnet,**
**dass** der Transport des medizinischen Gutes zum Zielort durch den Softwareagenten des Versandapothekers ausgelöst wird.

38. Verfahren nach einem oder mehreren der vorgenannten Ansprüche,
**dadurch gekennzeichnet,**
**dass** negative Ergebnisse einer Bonifikationsprüfung an den Softwareagenten des Versandapothekers weitergeleitet werden.

39. Verfahren nach einem oder mehreren der vorgenannten Ansprüche,
**dadurch gekennzeichnet,**
**dass** Arzneimittel- oder Produktstammdaten in einer Güterstammdatei verwaltet werden.

40. Verfahren nach einem oder mehreren der vorgenannten Ansprüche,
**dadurch gekennzeichnet,**
**dass** die Verwaltung der Güterstammdatei auf Gütergruppenebene erfolgt, wobei Merkmale wie Transportart, Übergabeart, Arzneimittelverträglichkeit für mindestens eine Versandapotheke verwaltet werden, wobei sich die verwalteten Güter in einem Güterlager befinden.

41. Verfahren nach einem oder mehreren der vorgenannten Ansprüche,
**dadurch gekennzeichnet,**
**dass** ein ermittelter Preis des anforderten medizinischen Gutes und/oder ein ermittelter Transportpreis des anforderten medizinischen Gutes zur Prüfung einer Kostenübernahme herangezogen werden.

42. Verfahren nach einem oder mehreren der vorgenannten Ansprüche,
**dadurch gekennzeichnet,**
**dass** der ermittelte Preis des angeforderten medizinischen Gutes an Preisfestlegungen adaptiert wird.

43. Verfahren nach einem oder mehreren der vorgenannten Ansprüche,
**dadurch gekennzeichnet,**
**dass** zur Ermittlung von Zuzahlungserfordernissen ein Abgleich zwischen den ermittelten Preisen und den Informationen der Kundendatei erfolgt.

44. Verfahren nach einem oder mehreren der vorgenannten Ansprüche,
**dadurch gekennzeichnet,**
**dass** Ergebnisse einer Kostenübernahmeprüfung sowie Ergebnisse einer Preisfindung elektronisch an ein Mittel zur Bearbeitung von finanzbuchhalterischen Vorgängen übertragen werden, wobei Rechungen aktiviert/generiert werden.

45. Verfahren nach einem oder mehreren der vorgenannten Ansprüche,
**dadurch gekennzeichnet,**
**dass** ein Mittel den Transportweg und die Art der Verpackung aufgrund der Charakteristika des Arzneimittels festlegt.

46. Verfahren nach einem oder mehreren der vorgenannten Ansprüche,
**dadurch gekennzeichnet,**
**dass** der Softwareagent des Versandapothekers und/oder der Softwareagent des Dienstleisters den Transportweg und die Verpackungsart festlegen.

47. Verfahren nach einem oder mehreren der vorgenannten Ansprüche,
**dadurch gekennzeichnet,**
**dass** eine Verpackung zur Erhaltung einer vorgeschriebenen Temperatur des Arzneimittels verwendet wird.

48. Verfahren nach einem oder mehreren der vorgenannten Ansprüche,
**dadurch gekennzeichnet,**
**dass** der Transport von medizinischen Gütern unterschiedlicher Verpackungsarten erfolgt.

49. Verfahren nach einem oder mehreren der vorgenannten Ansprüche,
**dadurch gekennzeichnet,**
**dass** logistische Prozesse der Versandapotheke durch den Softwareagenten des Dienstleisters verwaltet werden.

50. Verfahren nach einem oder mehreren der vorgenannten Ansprüche,
**dadurch gekennzeichnet,**
**dass** eine Lagerhaltung der medizinischen Güter, der Transport der bestellten Güter vom Güterlager zum Zielort, eine Chargenverwaltung und/oder eine Bestandsprüfung/Warendisposition und/oder eine Erfassung eines Haltbarkeitsdatums des medizinischen Gutes den logistischen Prozessen zugeordnet werden.

51. Verfahren nach einem oder mehreren der vorgenannten Ansprüche,
**dadurch gekennzeichnet,**
**dass** sich die Lagerung, eine Kommissionierung und der Transport der medizinischen Güter in einer funktionalen und örtlichen Nähe befinden.

52. Verfahren nach einem oder mehreren der vorgenannten Ansprüche,
**dadurch gekennzeichnet,**
**dass** nach Eingabe der Kundendaten und anschließender Verifikation mittels der Adressdatenbank mit der Durchführung einer Bonitätsprüfung begonnen wird.

53. Verfahren nach einem oder mehreren der vorgenannten Ansprüche,
**dadurch gekennzeichnet,**
**dass** die Pünktlichkeit und/oder die Regelmäßigkeit der Zahlungen des Anfordernden ausgewertet werden, und dass bei Abweichung der Zahlung von vorgebbaren Zahlungsparametern ein negativer Bonitätsvermerk erzeugt wird.

54. Verfahren nach einem oder mehreren der vorgenannten Ansprüche,
**dadurch gekennzeichnet,**
**dass** der Softwareagent des Versandapothekers und/oder der Softwareagent des Dienstleisters in Verbindung mit der medizinischen Datenbank eine gezielte medizinische Beratung ermöglichen.

55. Verfahren nach einem oder mehreren der vorgenannten Ansprüche,
**dadurch gekennzeichnet,**
**dass** mittels der Chargenverwaltung eine Zuordnung von produzierten Serien von Arzneimitteln stattfindet, wobei eine Chargennummer die eindeutige Zuordnung von Arzneimitteln zu einer Charge ermöglicht.

56. Verfahren nach einem oder mehreren der vorgenannten Ansprüche,
**dadurch gekennzeichnet,**
**dass** Lieferpapiere fakturiert werden, wobei die Lieferpapiere eine oder mehrere der folgenden Angaben enthalten:
- Rechnung,
- Lieferschein,
- Rezeptduplikat in digitalisierter Form mit Preisangabe,
- Ausdruck des Rezeptduplikates, falls Privatrezept vorliegt,
- (Kommunikations-)Unterlagen für zukünftige Bestellungen,
- Aufkleber mit dem Namen des Anfordernden, pro Gut und Menge,
- Angaben zu den Versandbedingungen.

57. Verfahren nach einem oder mehreren der vorgenannten Ansprüche,
**dadurch gekennzeichnet,**
**dass** das Rezept und/oder das Rezeptduplikat mit mindestens einem digitalen Stempel versehen wird, wobei der digitale Stempel den gesetzlichen Erfordernissen des Versandes von medizinischen Gütern entspricht.

58. Verfahren nach einem oder mehreren der vorgenannten Ansprüche,
**dadurch gekennzeichnet,**
**dass** der digitale Stempel eine Unterschrift eines Versandapothekers wiedergibt.

59. Verfahren nach einem oder mehreren der vorgenannten Ansprüche,
**dadurch gekennzeichnet,**
**dass** eine Rechnungsbegleichung per Lastschrift, Kreditkarte oder durch sonstige Inkassoleistungen erfolgt.

60. Verfahren nach einem oder mehreren der vorgenannten Ansprüche,
**dadurch gekennzeichnet,**
**dass** Mittel zur Ausführung einer Debitoren- und Finanzbuchhaltung Auftrags- und Zahlungsdaten sowie ein Mahnwesen übernehmen, offene Posten verwalten und die Auswertungen für die Versandapotheke und ferner eine Beratung der Anfordernden und Versandapotheker gewährleisten.

61. Verfahren nach einem oder mehreren der vorgenannten Ansprüche,
**dadurch gekennzeichnet,**
**dass** ausstehende Forderungen durch ein Mittel zur Überweisung an die Versandapotheke überwiesen werden.

62. Verfahren nach einem oder mehreren der vorgenannten Ansprüche,
**dadurch gekennzeichnet,**
**dass** der Versandapotheke vom Mittel zur Ausführung einer Debitoren- und Finanzbuchhaltung die Abrechnung postalisch und/oder elektronisch zugesandt wird.

63. Verfahren nach einem oder mehreren der vorgenannten Ansprüche,
**dadurch gekennzeichnet,**
**dass** das Mittel zur Ausführung einer Debitoren- und Finanzbuchhaltung für die Versandapotheke Auswertungen nach einem oder mehreren der folgenden Kriterien erstellt:
- monatlicher Abrechnungsnachweis der kompletten Rezeptabrechnung sowie Differenzbelege,
- Umsatzstatistik und Umsatzvergleichszahlen,
- statistische Auswertungen.

64. System zur Bearbeitung mindestens einer Anforderung eines medizinischen Gutes mit Mitteln zur Erfassung und Auswertung der Anforderung, sowie mit Mitteln zur Bestellung und Überprüfung des erhaltenen medizinischen Gutes sowie mit Mitteln zum Transport des medizinischen Gutes,
**dadurch gekennzeichnet,**
**dass** die Mittel zur Erfassung und Auswertung der Anforderung, die Mittel zur Bestellung und Überprüfung des erhaltenen medizinischen Gutes sowie die Mittel zum Transport des medizinischen Gutes mit einem Mittel zur Steuerung verbunden sind.

65. System nach Anspruch 64,
**dadurch gekennzeichnet,**
**dass** das Mittel zur Steuerung die Sendungsverfolgung des medizinischen Gutes überwacht.

66. System nach einem oder beiden der Ansprüche 64 und 65
**dadurch gekennzeichnet,**
**dass** das Mittel zur Steuerung eine Verbindung zwischen einem Dienstleister und einer Versandapotheke herstellt.

67. System nach einem oder mehreren der Ansprüche 64 bis 66,
**dadurch gekennzeichnet,**
**dass** das Mittel zur Steuerung einen Transfer der erfassten und ausgewerteten Anforderungen zwischen dem Dienstleister und der Versandapotheke ermöglicht.

68. System nach einem oder mehreren der Ansprüche 64 bis 67,
**dadurch gekennzeichnet,**
**dass** das Mittel zur Steuerung mit Mitteln zur Digitalisierung der erfassten Anforderungen, mit Mitteln zur digitalen Signierung von digitalisierten Anforderungen, mit Mitteln zur Lagerverwaltung des medizinischen Gutes und mit einer medizinischen Datenbank sowie einer Adressdatenbank verbunden ist.

69. System nach einem oder mehreren der Ansprüche 64 bis 68,
**dadurch gekennzeichnet,**
**dass** das Mittel zur Steuerung mit Mitteln zur Finanz- und Debitorenbuchhaltung, mit Mitteln zur Kostenübernahmeprüfung, mit Mitteln zur Preisfindung und mit Mitteln zur Bonitätsprüfung verbunden ist.

70. System nach einem oder mehreren der Ansprüche 64 bis 69,
**dadurch gekennzeichnet,**
**dass** das Mittel zur Steuerung dem Dienstleister zugeordnet ist.
